# EUROPÄISCHE PATENTSCHRIFT

(11) **EP 1 683 826 B1**
(45) Veröffentlichungstag und Bekanntmachung des Hinweises auf die Patenterteilung: **27.03.2013**
(21) Anmeldenummer: 05013652.2
(22) Anmeldetag: 24.06.2005
(51) Int. Cl.: D06N 7/00, B29C 44/04, B41M 3/00, B41M 3/16, B44C 1/20, B44C 3/04, B44C 3/02

(54) **Verfahren zur Herstellung einer definierten dreidimensionalen reliefartigen Struktur auf einer Oberfläche eines bereitgestellten Trägers sowie Verwendung einer mit Hilfe des Verfahrens hergestellten Struktur**
Process for manufacturing a defined three-dimensional relief-like structure on the surface of a support and use of a structure prepared by such process
Procédé de fabrication d'une structure en relief tridimensionnel sur la surface d'un support et utilisation d'une structure en relief préparée au moyen de ce procédé

(30) Priorität: 25.01.2005 DE 102005003413
(43) Veröffentlichungstag der Anmeldung: 26.07.2006
(73) Patentinhaber: Neubig, Hansgeorg, 95447 Bayreuth (DE)
(72) Erfinder: Neubig, Hansgeorg, 95447 Bayreuth (DE)
(74) Vertreter: Hofmann, Matthias

(56) Entgegenhaltungen:
- EP-A- 0 034 376
- WO-A-97/48557
- DE-A1- 2 743 794
- US-A- 3 798 098
- US-A- 4 268 615
- US-A- 5 149 548
- US-A- 5 639 540
- US-A- 6 004 419
- US-A1- 2002 142 106

## Beschreibung

Die Erfindung betrifft ein Verfahren zur Herstellung einer definierten dreidimensionalen reliefartigen Struktur auf einer Oberfläche eines bereitgestellten Trägers. Ferner betrifft die Erfindung eine Verwendung einer entsprechend hergestellten Struktur.

Bekannte definierte dreidimensionale reliefartige Strukturen sind Reliefschriften, z. B. Braille (Blindenschrift). Es ist bekannt, derartige Reliefschriften mittels Prägedruck (Matrize/Patrize), Siebdruck oder Schaumfarbe herzustellen. Derartige Verfahren sind teuer und zeitaufwändig. Aktuelle Druckschriften, z. B. für Sehbehinderte oder Blinde, müssen in Braille übersetzt werden und in teueren und aufwändigen Prägedrucken hergestellt werden. Zeichnungen, Karten oder Schaltpläne sind praktisch nicht herstellbar. Eine Schrift, die in Braille übersetzt ist, ist für einen Normalsehenden in der Regel nicht lesbar.

Gemäß der US 3 798 098 wird ein Muster auf die Oberfläche eines Trägers mit einer Druckfarbe gespritzt, die ein Schäumungsmittel umfasst. Das Schäumungsmittel erzeugt Gase durch Reaktion mit einem Härtemittel in einem transparenten Deckmaterial, das später auf die Druckfarbe aufgebracht wird. Das Deckmaterial kann durch Sprühen oder Walzenstreichen aufgebracht werden. Wenn das Deckmaterial trocken ist, wird dessen Oberfläche abgeschliffen, so dass poröse erhabene Bereiche auf dem Druckmuster entfernt werden.

Aus der DE 27 43 794 A1 ist ein Verfahren zur Herstellung eines Wand- oder Bodenbelags bekannt. Zuerst wird eine Lage aus einem oder mehreren schäumbaren Bestandteilen in einem ersten Muster derart geschaffen, dass beim Schäumen eine geschäumte Lage unterschiedlicher Dicke entsteht. Anschließend wird ein zweites Muster mit einem chemischen Reaktionsmittel zum Beschleunigen oder Verzögern der Ausdehnung auf die schäumbaren Bestandteile gedruckt. Es erfolgt eine Erwärmung, um das schäumbare Material zu schäumen und für ein Aushärten zu sorgen. Das chemische Reaktionsmittel kann Bestandteil einer Tinte oder Druckfarbe sein.

Aus der EP 0 034 376 A2 ist ein Stereoaufnahmeverfahren bekannt. Es wird ein wärmeempfindliches Stereoaufnahmematerial eingesetzt, das eine im Allgemeinen aus wärmeausdehnbaren Kugeln bestehende Schicht umfasst. Die Schicht wird mit einem Thermoaufnahmemedium verbunden, das durch Bilden einer thermoplastischen Druckdeckschicht auf einem Substrat bereitgestellt wird.

Aus der US 6 004 419 ist ein Wärmeübertragungsdruckblatt bekannt, das eine Substratschicht und eine thermisch expandierbare Druckschicht darauf aufweist. Die Druckschicht weist als Expansionsmittel thermisch expandierbare Mikrokapseln auf. Das Wärmeübertragungsdruckblatt wird in Druckkontakt mit einer bildaufnehmenden Schicht gebracht.

Aus der US 5 639 540 ist eine thermisch expansive Schicht bekannt, die eine Aufschäumlage umfasst. Die Aufschäumlage hat ein Aufschäummaterial, das bei Erhitzung Gas erzeugt.

In der WO 97/48557 A2, US 5 149 548 und US 4 268 615 sind weitere Verfahren zur Herstellung dreidimensionaler Strukturen offenbart.

Es ist daher eine Aufgabe der vorliegenden Erfindung, ein Herstellungsverfahren der eingangs genannten Art derart weiterzubilden, dass die gewünschten reliefartigen Strukturen mit weniger Kostenaufwand und gleichzeitig mit einer aus den bekannten Druckverfahren gewohnten Auflösung zu erzeugen.

Diese Aufgabe ist erfindungsgemäß gelöst durch ein Verfahren mit den im Kennzeichnungsteil des Anspruches 1 angegebenen Merkmalen.

Durch das erfindungsgemäße Verfahren können aus der Drucktechnik bereits bekannte Arbeitsweisen zur Herstellung von reliefartigen Strukturen übernommen werden. Es ist hierdurch möglich, erhabene Strukturen in Form von Reliefschriften, Karten oder Plänen zu erzeugen. Schriften und Zeichnungen können damit sowohl für Sehbehinderte bzw. Blinde als auch für Normalsehende, einen genügenden Kontrast vorausgesetzt, ertastbar bzw. lesbar gemacht werden, ohne dass hierzu eine Übersetzung in Braille oder zeitaufwändige und teure Prägedrucke notwendig sind. Das erfindungsgemäße Verfahren erlaubt eine schnelle Strukturherstellung ohne zeitliche Verzögerung, was auch unter dem Schlagwort "print on demand" bekannt ist. Es können auf diese Weise z. B. Mindesthaltbarkeitsdaten auf Lebensmitteln, Produktbezeichnungen auf Medikamenten, Pläne und Karten geschrieben bzw. hergestellt werden, die ertastbar und auch normal lesbar sind. Ein Normalsehender kann beispielsweise die so hergestellten Pläne und Karten dann genauso lesen, wie sie ein Sehbehinderter bzw. Blinder ertasten kann. Eine Umsetzung ist nicht mehr erforderlich. Eine zum normalen Lesen ausreichende Kontrastwirkung ergibt sich in vielen Fällen schon aufgrund der Tatsache, dass die hergestellte Struktur über die restliche Oberfläche übersteht. Durch Zusatzmaßnahmen, z. B. durch Einfärben der hergestellten Struktur, kann ein zusätzlicher Kontrast geschaffen werden.

Es können Druckkörper zum Einsatz kommen, die aus der Druckindustrie, z. B. aus dem Prägedruck oder dem Siebdruck, bekannt sind. Insbesondere dann, wenn mikroverkapselte Reaktionsstoffe eingesetzt werden, lassen sich durch die Drucktechnik fein aufgelöste erhabene Strukturen erzeugen.

Das Einbringen thermischer Energie führt zu einem sicheren Ausreagieren der beiden Reaktionskomponenten dort, wo dies gewünscht ist.

Reaktionsstoffe wie in Anspruch 2 angegeben lassen sich definiert und selektiv miteinander zur Reaktion bringen. Hierdurch lassen sich sehr feine dreidimensionale reliefartige Strukturen erzeugen.

Ein Thermotransferverbund wie in Anspruch 3 angegeben stellt die zum Ausreagieren erforderliche thermische Energie in kompakter und leicht handzuhabender Weise zur Verfügung.

Die Reaktionskomponentenschichten können insbesondere chemisch derart aufgebaut sein, dass sich beim Aufschäumen ein Kunststoffschaum auf Basis von PU (Polyurethan), PS (Polystyrol) oder PP (Polypropylen) bildet. Derartige Reaktionskomponenten-Paare sind bekannt.

Ein Wachsanteil erleichtert das Ablösen der Thermotransferschicht nach dem Ausreagieren der Reaktionskomponenten. Auch andere Trennmittel anstelle eines Wachsanteils sind möglich, z. B. eine Silikonbeschichtung oder eine Harzbeschichtung.

Schließlich ist es eine Aufgabe der vorliegenden Erfindung, eine Verwendung für die durch das Verfahren herstellbaren Strukturen anzugeben.

Diese Aufgabe ist erfindungsgemäß gelöst durch die im Anspruch 4 angegebene Verwendung.

Bei der Verwendung als Blindenschrift kommen die Vorteile des Verfahrens sowie der erzeugten Struktur optimal zum Tragen.

Ausführungsbeispiele der Erfindung werden nachfolgend anhand der Zeichnung näher beschrieben. In dieser zeigen:
- Fig. 1: einen Querschnitt durch einen Schichtverbund vor Durchführung eines Verfahrens zur Herstellung einer definierten dreidimensionalen reliefartigen Struktur auf der Oberfläche eines Trägers;
- Fig. 2: ebenfalls im Querschnitt eine Momentaufnahme bei der Durchführung des Herstellungsverfahrens, bei der ein Druckkopf in einer Bereitstellungsposition relativ zum Schichtverbund dargestellt ist;
- Fig. 3: ebenfalls im Querschnitt eine spätere Momentaufnahme des Herstellungsverfahrens, bei der der Druckkopf in einer Druckposition dargestellt ist;
- Fig. 4: ebenfalls im Querschnitt den Träger mit der mittels des Herstellungsverfahrens aufgebrachten dreidimensionalen reliefartigen Struktur;
- Fig. 5: eine zu Fig. 2 ähnliche Darstellung eines Schichtverbundes und eines Druckkopfes in einer Bereitstellungsposition vor Durchführung einer nicht erfindungsgemäßen Ausführungsform einer Herstellungsverfahrens zur Herstellung einer reliefartigen Struktur.

Mit einem vorbereiteten Schichtverbund 1 lässt sich ein Verfahren zur Herstellung einer definierten dreidimensionalen reliefartigen Struktur auf der Oberfläche eines Trägers durchführen.

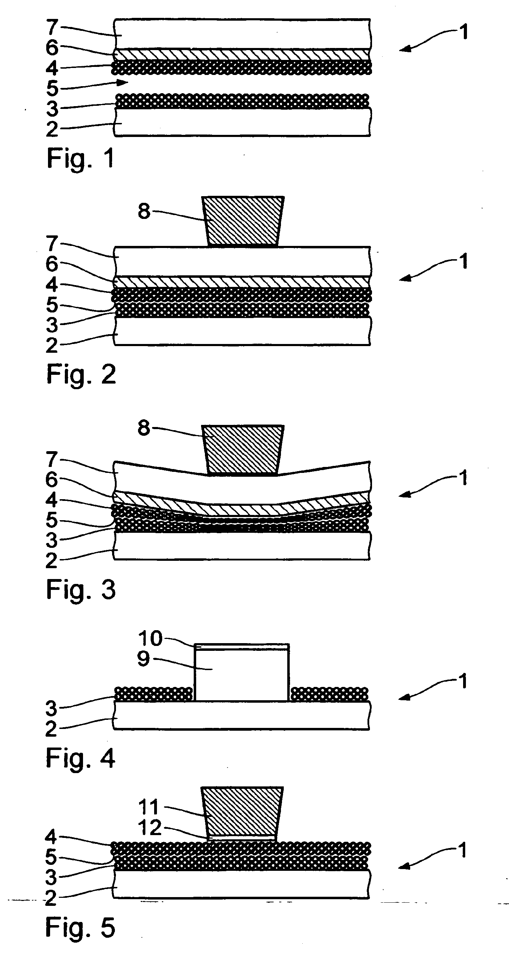

Die Fig. 1 bis 3 zeigen eine Ausführungsform des Schichtverbundes 1. Fig. 4 zeigt den Träger mit der hergestellten Struktur. Als Träger dient ein Bedruckstoff 2.

Im Schnitt der Fig. 1 bis 3 oberhalb des Bedruckstoffs 2 weist der Schichtverbund 1 eine erste Reaktionskomponentenschicht 3 auf, die als mikroverkapselte Beschichtung ausgeführt ist. In Fig. 1 oberhalb der ersten Reaktionskomponentenschicht 3 ist eine zweite Reaktionskomponentenschicht 4 angeordnet, die ebenfalls als mikroverkapselte Beschichtung ausgeführt ist. Zwischen den beiden Reaktionskomponentenschichten 3, 4 liegt in der Vorbereitungs-Anordnung des Schichtverbundes 1 nach Fig. 1 ein Zwischenraum 5 vor.

In Fig. 1 oberhalb der zweiten Reaktionskomponentenschicht 4 hat der Schichtverbund 1 eine Farb/Wachsbeschichtung 6. Es handelt sich hierbei um eine Farbschicht aus Druckfarbe mit einem Wachsanteil. In Fig. 1 oberhalb der Farbschicht 6 angeordnet ist eine Thermotransferschicht 7, welche als handelsübliches Thermotransferband nach Art einer Thermotransferfolie ausgeführt ist.

Die mikroverkapselten Reaktionsstoffe der beiden Reaktionskomponentenschichten 3, 4 bilden beim Ausreagieren einen Kunststoffschaum auf der Basis von PU (Polyurethan), PS (Polystyrol) oder PP (Polypropylen). Reaktionskomponentenpaare, mit denen derartige Kunststoffschäume hergestellt werden, sind handelsüblich.

Mit dem Schichtverbund 1 lässt sich eine definierte dreidimensionale reliefartige Struktur auf der Oberfläche des Trägers 2 folgendermaßen herstellen: Beim Schichtverbund 1 sind sowohl der Träger 2 mit ebener Oberfläche als auch die beiden Reaktionskomponenten bereitgestellt. Anschließend wird die zweite Reaktionskomponente der zweiten Reaktionskomponentenschicht 4 zweidimensional mit der Kontur der gewünschten, herzustellenden Struktur definiert mit der ersten Reaktionskomponente der ersten Reaktionskomponentenschicht 3 in reaktiven Kontakt gebracht. Hierzu wird ein Druckkopf 8 zunächst oberhalb der Thermotransferschicht 7 in Bereitstellungsposition gebracht, wie in Fig. 2 dargestellt. Anschließend wird die zweite Reaktionskomponentenschicht 4 mit Hilfe des Druckkopfs 8, dessen der Thermotransferschicht 7 zugewandte Druckfläche hinsichtlich ihrer Strukturierung der gewünschten, herzustellenden Struktur entspricht, selektiv gegen die ersten Reaktionskomponentenschicht 3 gedrückt, wie in der Momentanstellung nach Fig. 3 dargestellt. Aufgrund des durch den Druckkopf 8 ausgeübten Drucks reagiert zudem die Thermotransferschicht 7, so dass im Bereich der gedrückten Struktur über die Thermotransferschicht 7 zusätzlich thermische Energie in die beiden Reaktionskomponentenschichten 3, 4 eingetragen wird. Durch die Kombination von Druck und Temperatur werden die Mikrokapseln der Reaktionskomponentenschichten 3, 4 zerstört und es wird die Reaktion zum Aufschäumen des Kunststoffschaums zur Erzeugung der gewünschten Struktur auf dem Träger 2 ausgelöst. Gleichzeitig wird durch die Kombination von Druck und Einbringen thermischer Energie ein Teil der Farbschicht 6 auf die dieser zugewandten Oberfläche der Reaktionskomponentenschichten 3, 4 übertragen.

Ein Schichtverbund stellt nicht nur über die Thermotransferschicht thermische Energie zum Ausreagieren der Reaktionskomponenten bereit, sondern bevorzugt auch Farbe, um die hergestellte erhabene Struktur auch farblich von ihrer Umgebung abzuheben.

Fig. 4 zeigt beispielhaft eine mit diesem Verfahren hergestellte definierte dreidimensionale reliefartige Struktur 9. Die Oberseite der Struktur 9 trägt eine Farb-Deckschicht 10. Der nicht ausreagierte obere Schichtverbund-Anteil mit den Resten der zweiten Reaktionskomponentenschicht 4, der Farbschicht 6 und der Thermotransferschicht 7 ist abgenommen. Dieses Abnehmen wird durch den als Trennmittel dienenden Wachsanteil der Farbschicht 6 erleichtert. Anstelle des Wachsanteils der Farbschicht 6 kann auch ein anderes Trennmittel vorgesehen sein, z. B. eine Silikonbeschichtung oder eine Harzbeschichtung auf mindestens einer der beiden beim Abnehmen des nicht ausreagierten oberen Schichtverbund-Anteils einander zugewandten und zu trennenden Schichten. Dort, wo keine Aufschäum-Reaktion stattgefunden hat, liegt die erste Reaktionskomponentenschicht 3 weiterhin mikroverkapselt und nicht eingefärbt vor.

Mit diesem Verfahren lässt sich also eine beliebige Struktur einerseits dreidimensional hervorheben und andererseits einfärben. Ein Text kann z. B. gleichzeitig einerseits schwarz/weiß oder farbig gedruckt und andererseits erhaben hervorgehoben werden, so dass er gelesen und/oder ertastet werden kann.

Bei diesem Thermotransfer-Verfahren wird also der mit der ersten Reaktionskomponente 3 mikroverkapselte beschichtete Bedruckstoff 2, bei dem es sich um Papier oder Folie handeln kann, in einem ThermotransferDrucker mit der eingefärbten, insbesondere handelsüblichen Thermotransferfolie 7, die mit der mikroverkapselten Reaktionskomponentenschicht 4 beschichtet ist, zusammengeführt und bedruckt. Beim eigentlichen Druckvorgang, d. h. wenn der Druckkopf 8 die Form, also die zweidimensionale Kontur der gewünschten Struktur, mit Hitze und Druck aufbringt, werden die Mikrokapseln durch Druck und/oder Hitze zerstört. Die beiden Reaktionskomponenten werden freigesetzt und können dann reagieren und aufschäumen. Die über die Farbschicht 6 mit aufgedruckte Wachsschicht fungiert zugleich als Farbe und Trennmittel.

Die Höhe des aufgeschäumten Reliefs bzw. der Struktur 9 wird einerseits bestimmt durch die Größe der Mikrokapseln und andererseits durch die Dicke der Reaktionskomponentenschichten 3, 4. Die Größe der Mikrokapseln ist ferner ein Maß für die mit dem Herstellverfahren erreichbare Auflösung. Auf dem Bedruckstoff 2 verbleibt nur eine Komponente, so dass eine weitere Reaktion bzw. ein weiteres Aufschäumen nach dem Druckvorgang ausgeschlossen ist. Die abgenommene Thermotransferfolie wird nach dem Gebrauch vernichtet.

Bei einem nicht erfindungsgemäßen Verfahren wird das Verfahren mit einer Variante eines Schichtverbundes ausgeführt werden, bei dem die Thermotransferschicht 7 fehlt und die ansonsten aufgebaut ist wie der Schichtverbund 1. In diesem Fall werden die Mikrokapseln ausschließlich durch Druck und nicht durch eine Kombination von Druck und dem Einbringen thermischer Energie zerstört.

Fig. 5 zeigt eine solche nicht erfindungsgemäße Ausführungsform eines Schichtverbundes 1 zur Vorbereitung eines nicht erfindungsgemäßen Verfahrens zur Herstellung einer definierten dreidimensionalen reliefartigen Struktur nach Art der Struktur 9. Komponenten, die denjenigen entsprechen, die vorstehend schon unter Bezugnahme auf die Fig. 1 bis 4 erläutert wurden, tragen dieselben Bezugsziffern und werden nicht nochmals im Einzelnen diskutiert.

Beim Schichtverbund 1 nach Fig. 5 fehlen die Farbschicht 6 und die Thermotransferschicht 7. Die zweite Reaktionskomponentenschicht 4 ist nicht zur ersten Reaktionskomponentenschicht 3 beabstandet, sondern liegt direkt flächig auf dieser auf. Aufgrund der Mikroverkapselung der beiden Reaktionskomponentenschichten 3, 4 ist trotz des direkten Kontaktes ein Reagieren der beiden Reaktionskomponenten zunächst ausgeschlossen. Oberhalb der zweiten Reaktionskomponentenschicht 4 ist in Bereitstellungsposition ein Klischee 11 als weiteres Beispiel eines Druckkörpers angeordnet, welches auf seiner dem Schichtverbund 1 zugewandten Seite eine Druck-Farbschicht 12 trägt.

Die nicht erfindungsgemäße Herstellung der definierten dreidimensionalen reliefartigen Struktur mit dem Schichtverbund 1 nach Art von Fig. 5 wird nachfolgend nur dort beschrieben, wo es sich von der Herstellung der Struktur 9 unterscheidet, die vorstehend anhand der Fig. 1 bis 4 schon erläutert wurde. Nach dem Bereitstellen des Trägers 2 und der beiden Reaktionskomponentenschichten 3, 4 wird die zweite Reaktionskomponente zweidimensional mit der Kontur der gewünschten, herzustellenden Struktur definiert mit der ersten Reaktionskomponente in reaktiven Kontakt gebracht. Hierzu wird das Klischee 11, dessen Druckfläche hinsichtlich ihrer Strukturierung der gewünschten, herzustellenden Struktur entspricht, selektiv auf die zweite Reaktionskomponentenschicht 4 gedrückt. Hierdurch drückt die zweite Reaktionskomponentenschicht 4 entsprechend selektiv auf die erste Reaktionskomponentenschicht 3, wodurch wiederum die Mikroverkapselung beider Reaktionskomponentenschichten 3, 4 aufbricht und das Ausschäumen ausgelöst wird. Gleichzeitig wird die Druck-Farbschicht 12 auf die ausschäumende Struktur übertragen, so dass dort selektiv die Farb-Deckschicht 10 gebildet wird. Es resultiert wiederum eine Struktur 9 mit einer Farb-Deckschicht 10 nach Art derjenigen, die in Fig. 4 dargestellt ist.

Bei diesem nicht erfindungsgemäßen Klischee-Verfahren, welches ansonsten analog dem Thermotransfer-Verfahren abläuft, werden die Mikrokapseln der Reaktionskomponentenschichten 3, 4 ausschließlich durch Druck zerstört.

Die mit den beschriebenen Verfahren hergestellte Struktur 9 kann insbesondere als Blindenschrift Verwendung finden.

## Patentansprüche

1. Verfahren zur Herstellung einer definierten dreidimensionalen reliefartigen Struktur (9) auf einer Oberfläche eines bereitgestellten Trägers (2), umfassend die folgenden Schritte:
- Bereitstellen einer ersten Reaktionskomponente (3),
- Bereitstellen einer zweiten Reaktionskomponente (4),
- wonach die zweite Reaktionskomponente (4) zweidimensional mit der Kontur der gewünschten Struktur (9) definiert mit der ersten Reaktionskomponente (3) in reaktiven Kontakt gebracht wird,
- wonach die beiden Reaktionskomponenten (3, 4) im reaktiven Kontaktbereich miteinander reagieren und durch Aufschäumen die gewünschte Struktur (9) auf dem Träger (2) erzeugen,
**dadurch gekennzeichnet, dass**
- die zweite Reaktionskomponente (4) zweidimensional mit der Kontur der gewünschten Struktur (9) definiert mit der ersten Reaktionskomponente (3) in Kontakt gebracht wird, indem
- beide Reaktionskomponenten (3, 4) in Form benachbarter Schichten bereitgestellt werden, und
- die zweite Reaktionskomponente (4) mittels eines Druckkörpers (8; 11), dessen Druckfläche hinsichtlich ihrer Strukturierung der gewünschten Struktur (9) entspricht, selektiv gegen die erste Reaktionskomponente (3) gedrückt wird, und
- zusätzlich zum Druck ein Einbringen thermischer Energie zum Auslösen der Reaktion zum Aufschäumen der beiden Reaktionskomponenten (3, 4) erfolgt.

2. Verfahren nach Anspruch 1, **dadurch gekennzeichnet, dass** die beiden Reaktionskomponenten (3, 4) in Form von mikroverkapselten Reaktionsstoffen bereitgestellt werden.

3. Verfahren nach Anspruch 1 oder 2, **dadurch gekennzeichnet, dass** die thermische Energie mit Hilfe eines Thermotransferverbundes (7) eingebracht wird.

4. Verwendung der gemäß dem Herstellungsverfahren nach einem der Ansprüche 1 bis 3 hergestellten definierten dreidimensionalen reliefartigen Struktur (9) auf einer Oberfläche als Blindenschrift.

## Claims

1. Method for the production of a defined three-dimensional relief-like structure (9) on the surface of a provided substrate (2), comprising the following steps:
- providing a first reaction component (3),
- providing a second reaction component (4),
- after which the second reaction component (4) defined two-dimensionally with the contour of the desired structure (9) is brought into reactive contact with the first reaction component (3),
- after which the two reaction components (3, 4) react with one another in the reactive contact area and by foaming produce the desired structure (9) on the substrate (2),
**characterised in that**
- the second reaction component (4) defined two-dimensionally with the contour of the desired structure (9) is brought into contact with the first reaction component (3), **in that**
- both reaction components (3, 4) are provided in the form of adjacent layers, and
- the second reaction component (4) is pressed by means of a pressing body (8; 11), the pressing surface of which corresponds with regard to its structure to the desired structure (9), selectively against the first reaction component (3), and
- in addition to the pressure thermal energy is introduced for triggering the reaction for foaming the reaction components (3, 4).

2. Method according to claim 1, **characterised in that** the two reaction components (3, 4) are provided in the form of micro-encapsulated reaction materials.

3. Method according to claim 1 or 2, **characterised in that** the thermal energy is introduced by means of a thermal transfer compound (7).

4. Use of the defined three-dimensional relief-like structure (9) produced according to the production method according to one of claims 1 to 3 on a surface as braille.

## Revendications

1. Procédé de fabrication d'une structure (9) en relief tridimensionnelle définie sur la surface d'un support (2) préparé, comprenant les étapes suivantes :
- préparation d'un premier composant de réaction (3),
- préparation d'un deuxième composant de réaction (4),
- après quoi, les deux composants de réaction (3, 4) réagissent ensemble dans une zone de contact de réaction et engendrent la structure (9) souhaitée sur le support (2) par la formation de mousse, **caractérisé en ce que**
- le second composant de réaction (4) défini de manière bidimensionnelle avec le profil de la structure (9) souhaitée est mis en contact avec le premier composant de réaction (3), en
- - les deux composants de réaction (3, 4) sont préparés sous la forme de couches de produit voisines, et
- - le second composant de réaction (4) est comprimé sélectivement contre le premier composant de réaction (3) au moyen d'un organe de pression (8 ; 11) dont la surface de compression correspond à la structure (9) souhaitée en ce qui concerne la structuration, et
- qu'en plus de la compression, il y a un apport d'énergie thermique pour le déclenchement de la réaction pour la formation de mousse des deux composants de réaction (3, 4).

2. Procédé selon la revendication 1 **caractérisé en ce que** les deux composants de réaction (3, 4) sont préparés sous la forme de produits réactionnels micro-encapsulés.

3. Procédé selon les revendications 1 ou 2 **caractérisé en ce que** l'énergie thermique est apportée à l'aide d'un composite (7) de transfert thermique.

4. Utilisation de la structure (9) en relief tridimensionnelle définie selon le procédé de fabrication d'après l'une des revendications de 1 à 3 sur une surface en tant qu'écriture de Braille.
